# FASCICULE DE BREVET EUROPEEN

(11) **EP 1 525 502 B1**
(45) Date de publication et mention de la délivrance du brevet: **13.09.2006**
(21) Numéro de dépôt: 03756501.7
(22) Date de dépôt: 18.07.2003
(51) Int. Cl.: G02B 6/293, G02B 6/26

(54) **PROCEDE ET DISPOSITIF DE POSITIONNEMENT D UN COMPOSANT OPTIQUE ENTRE DEUX FIBRES OPTIQUES**
VERFAHREN UND VORRICHTUNG ZUM POSITIONIEREN EINER OPTISCHEN KOMPONENTE ZWISCHEN ZWEI OPTISCHEN FASERN
METHOD AND DEVICE FOR INTERPOSING AN OPTICAL COMPONENT BETWEEN TWO OPTICAL FIBRES

(30) Priorité: 26.07.2002 FR 0209534
(43) Date de publication de la demande: 27.04.2005
(73) Titulaire: Atmel Grenoble S.A., 38521 Saint-Egrève Cedex (FR)
(72) Inventeur: MOY, Jean-Pierre, Thales Intellectual Property, F-94117 Arcueil Cedex (FR); RAMEL, Romain, Thales Intellectual Property, F-94117 Arcueil Cedex (FR); DHARDEMARE, Emmanuel, Thales Intellectual Property, F-94117 Arcueil Cedex (FR)
(74) Mandataire: Collet, Alain
(86) Numéro de dépôt international: PCT/FR2003/002289
(87) Numéro de publication internationale: WO 2004/013669

(56) Documents cités:
- EP-A- 0 852 338
- US-A- 5 325 456
- US-A- 5 375 181
- US-B1- 6 282 339

## Description

L'invention se rapporte à un procédé et à un dispositif de positionnement d'un composant optique entre deux fibres optiques.

Pour présenter l'invention, on se place dans le domaine des télécommunications par fibres optiques et le composant décrit est un filtre permettant d'isoler une seule longueur d'onde, souvent appelée « canal » parmi toutes celles qui circulent dans un réseau optique. Ceci est obtenu en plaçant dans le faisceau lumineux un filtre dont la bande passante est choisie de manière à transmettre au mieux le canal à la longueur d'onde visée et toute sa modulation, et à arrêter les autres canaux.

Il est bien entendu que l'invention n'est pas limitée au domaine des télécommunications par fibres optiques ni à un filtre placé entre deux fibres optiques. D'autres composants optiques tels que par exemple, des cristaux polariseurs peuvent réclamer cette configuration entre deux fibres optiques.

II est particulièrement avantageux de réaliser des filtres accordables par une tension électrique, que l'on peut ainsi ajuster sur le canal voulu, et changer à volonté de canal selon les besoins. Cette idée a été développée et reprise par de nombreux auteurs. Elle repose le plus souvent sur une cavité Fabry-Pérot d'épaisseur variable, différentes techniques étant utilisées pour réaliser les miroirs de la cavité.

Une technique est décrite dans l'article de A. Spisser et autres, "Highly Selective 1.55 micrometer InP/airgap micromachined Fabry-Perot filter for optical communications" dans Electronics Letters, N°34(5), pages 453-454, 1998. D'autres réalisations ont été proposées, en silicium micro-usiné, et en alliages à base d'arséniure de gallium.

Dans toutes les configurations, et en particulier dans celle décrite par Spisser et autres, qui réalise les miroirs de la cavité grâce à des "miroirs de Bragg" en InP/air, on est en présence de membranes minces de petit diamètre (de l'ordre de 40 à 200 µm).

II faut donc que le diamètre du faisceau soit compatible avec le diamètre des membranes, ce qui impose des moyens optiques de collimation ou focalisation. Un moyen connu de réaliser cette focalisation est la soudure en bout de fibre d'un barreau de silice suivi d'une lentille à gradient d'indice. Par exemple, de tels ensembles sont commercialisés par la société Highwave sous la dénomination Gradissimo® , et peuvent fournir une tache gaussienne de quelques dizaines de µm de diamètre. D'autres sociétés proposent de façon similaires des fibres munies d'une lentille à l'une de ses extrémités. Cet assemblage est couramment appelé fibre lentillée.

Une disposition simple pour un composant filtre est donc :
Fibre optique lentillée - filtre - fibre optique lentillée

Pour obtenir une perte d'insertion limitée à 0,5 dB lors du passage d'un rayon lumineux d'une fibre optique lentillée à l'autre, on est tenu de respecter des tolérences de position des fibres et du composant optique entre eux. Un ordre de grandeur de tolérences à respecter est le suivant :
- tolérance relative de positionnement des fibres lentillées selon un axe (z) longitudinal des fibres : ± 25 µm ;
- tolérance relative de positionnement des fibres lentillées selon des axes (x, y) perpendiculaires à l'axe longitudinal : ± 2 µm ;
- tolérance relative de positionnement angulaire des fibres lentillées : ± 5 mrad.

Pour respecter de telles tolérances, on peut introduire de la lumière dans la fibre d'entrée, et optimiser la position de la fibre de sortie en utilisant le signal optique, puis l'immobiliser. Ce procédé, appelé alignement dynamique est extrêmement précis, mais long et donc coûteux, car les différents degrés de liberté ne sont pas absolument indépendants dans la pratique.

L'invention a pour but de proposer un procédé et un dispositif très simples qui permettent d'atteindre de manière passive, c'est à dire sans introduction de lumière dans la fibre d'entrée, une tolérance suffisante pour le positionnement de deux fibres optiques et d'un composant optique, au prix d'un faible accroissement de la perte d'insertion par rapport à un alignement dynamique.

Beaucoup de composants à base de fibres optiques sont montés en enfilant successivement dans un capillaire commun les fibres, les lentilles et un composant optique auquel on a donné par construction une forme cylindrique.

Dans le cas des filtres Fabry-Pérot accordables de petit diamètre comme ceux constitués de membranes d'InP, une difficulté supplémentaire empêche l'utilisation de cette technique connue : le filtre doit lui aussi être centré selon des axes (x, y) perpendiculaires à l'axe longitudinal (z) des fibres optiques et orienté angulairement de manière très précise par rapport aux fibres d'entrée et sortie. De plus, il faut accéder aux contacts électriques situés sur le filtre pour son accordabilité.

Néanmoins, il reste souhaitable de réaliser l'alignement entre les fibres d'entrée et sortie au préalable, de façon à n'avoir à positionner avec précision que le filtre.

On pourrait penser réaliser deux trous du diamètre extérieur des fibres dans un bloc de matériau rigide dans lequel on aurait ménagé un emplacement au milieu pour le filtre.

Ceci conduit à des tolérances d'usinage absolument irréalistes (Ø126±1µm sur 10 à 15 mm de long). Ce procédé n'est donc pas applicable.

L'invention a pour but de résoudre les problèmes énumérés plus haut et à cet effet l'invention a pour objet un procédé de positionnement d'un composant optique entre deux fibres optiques munies à leur extrémité de lentilles, caractérisé en ce qu'il consiste à :
- percer un support de façon à y fixer un tube capillaire dont le diamètre intérieur est prévu pour y glisser une fibre optique,
- fixer le tube capillaire dans le perçage du support,
- réaliser une découpe borgne du support et du tube capillaire de façon à séparer le tube capillaire en deux parties, une première face plane de la découpe étant perpendiculaire à un axe longitudinal du tube capillaire,
- positionner le composant sur la première face plane,
- positionner une fibre optique dans chacune des parties.

L'invention a également pour objet un dispositif de positionnement d'un composant optique entre deux fibres optiques munies à leur extrémité de lentilles, caractérisé en ce qu'il comporte un support au travers duquel est fixé un tube capillaire, le support comportant une découpe borgne de façon à séparer le tube capillaire en deux parties, en ce que la découpe comporte une première face plane perpendiculaire à un axe longitudinal du tube capillaire, et en ce que le composant est positionné sur la première face plane.

L'invention sera mieux comprise et d'autres avantages apparaîtront à la lecture de la description détaillée d'un mode de réalisation de l'invention donné à titre d'exemple, description illustrée par le dessin joint dans lequel :
- la figure 1 illustre une première variante de procédé et de dispositif, variante dans laquelle la découpe du support comporte deux faces parallèles ;
- la figure 2 illustre une seconde variante de procédé et de dispositif, variante dans laquelle la découpe du support comporte deux faces formant entre elles un angle aigu.

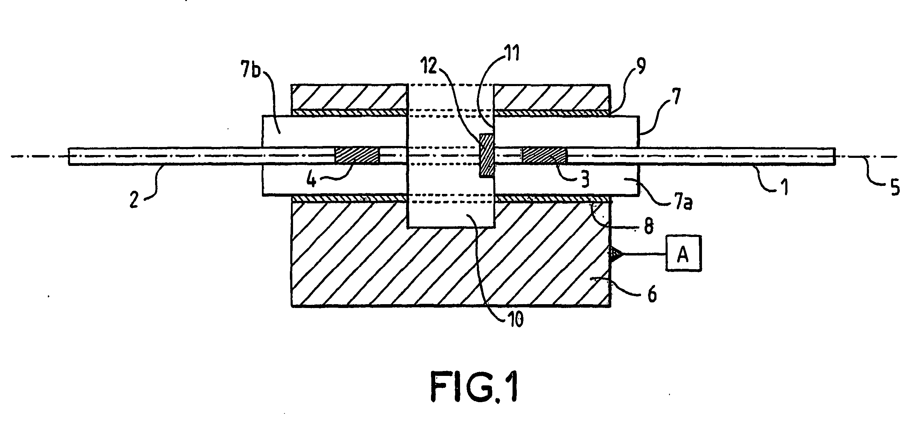

La figure 1 illustre le positionnement de deux fibres optiques 1 et 2 munies à leur extrémité de lentilles, respectivement 3 et 4. Avantageusement, les lentilles 3 et 4 focalisent un rayonnement qui les traverse sur un diamètre de mode gaussien compris entre 1 et 50 µm. Autrement dit, les lentilles 3 et 4 forment des moyens de focalisation.

On cherche à positionner les deux fibres 1 et 2 dans le prolongement l'une de l'autre selon un axe 5 par rapport à un support 6 rigide.

Pour ce faire, on utilise un tube capillaire 7 dont le diamètre intérieur est prévu pour y glisser une fibre optique. On choisit le tube capillaire et la fibre optique de façon à ce que le jeu fonctionnel entre le diamètre extérieur de la fibre et le diamètre intérieur du tube soit le plus faible possible sans qu'il y ait serrage. Il existe par exemple, de façon classique, des fibres optiques dont le diamètre extérieur est de 125 µm ± 1µm. De même, il existe des tubes capillaires de diamètre intérieur 126 -0/+ 1µm. Ces tubes ont une longueur de 50 mm et un diamètre extérieur de 2 mm et sont peu coûteux.

On perce le support 6 de façon à fixer dans un trou 8 ainsi réalisé le tube capillaire 7. Le trou 8 traverse de part en part le support. La fixation du tube capillaire 7 dans le trou 8 est, par exemple, réalisée par collage. Sur la figure 1, le film de colle est représenté au repère 9. Une fois le tube capillaire 7 fixé dans le trou 8 du support 6, on réalise une découpe 10 borgne du support 6 et du tube capillaire 7. La découpe 10 sépare le tube capillaire 7 en deux parties 7a et 7b. Chaque partie 7a et 7b est destinée à recevoir une des fibres optiques 1 et 2. Les deux parties 7a et 7b, formant après découpe deux tubes capillaires distants l'un de l'autre, sont par construction parfaitement alignées.

Une face plane 11 de la découpe 10 est réalisée de telle façon à être perpendiculaire à l'axe 5. On peut ainsi positionner un composant optique 12 sur la face 11. Pour réduire les tolérances de perpendicularité entre la face plane de la découpe 10 et l'axe 5, il est possible de réaliser le trou 8 à partir d'une face de référence A du support 6. La face de référence A est une face externe du support 6 et est perpendiculaire à l'axe 5 du trou 8 que l'on perce dans le support 6. Ensuite, lors de la réalisation de la découpe 10 et notamment de sa face plane 11, on utilisera à nouveau la face A comme surface de référence. Ce qui permet de réduire les tolérances de perpendicularité.

Avantageusement, le positionnement du composant 12 est réalisé en repérant l'axe 5 longitudinal du tube capillaire 7 sur la première face plane 11 de la découpe 10, puis en positionnant le composant 12 par rapport au repère ainsi défini. Plus précisément, deux variantes peuvent être mises en oeuvre pour réaliser le positionnement du composant 12 sur la face plane 11. La première variante est illustrée sur la figure 1. Le tube capillaire 7 est collé au support 6 de façon à former ensemble un bloc optiquement homogène. Le repérage de l'axe longitudinal 5 du tube capillaire 7 et le positionnement du composant 12 par rapport au repère se fait par observation visuelle, suivant l'axe 5 longitudinal du capillaire 7.

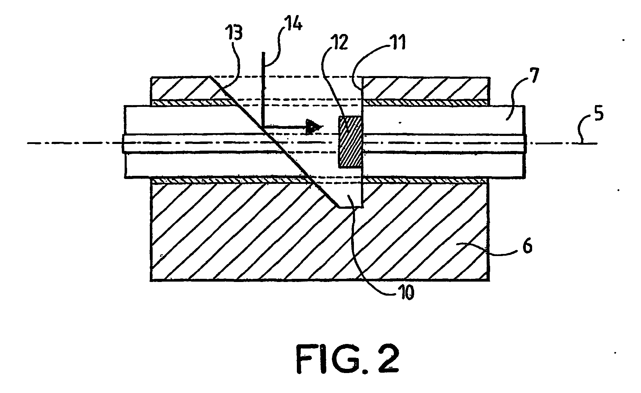

La deuxième variante est illustrée sur la figure 2. une seconde face 13 plane de la découpe 10 forme un angle aigu avec la première face 11 plane de la découpe 10. Le repérage de l'axe longitudinal 5 du tube capillaire 7 et le positionnement du composant 12 par rapport au repère se fait par observation visuelle en utilisant la seconde face plane 13 de la découpe 10 comme moyen de renvoi optique. Dans cette deuxième variante, l'axe d'observation visuelle est matérialisé par la flèche 14.

Dans les deux variantes permettant de positionner le composant 12, on peut réaliser l'observation à l'aide d'un microscope. On réalise une première observation du capillaire 7 après découpe 10 et avant la mise en place du composant 12. Lors de cette première observation, on repère l'axe 5 au moyen d'une mire ou d'un réticule du microscope. On place ensuite le composant 12 sur la face plane 11 et on réalise une nouvelle observation en ajustant la position du composant 12 par rapport à la mire ou au réticule du microscope.

Après avoir fixé la position du composant 12, on met en place les deux fibres optiques 1 et 2. Il est possible de tenir compte des imperfections inhérentes à la fabrication des fibres optiques pour réduire encore les pertes du dispositif complet. Parmi ces imperfections, on note par exemple un décentrage du coeur de la fibre ou un écart angulaire entre l'axe du coeur de la fibre et l'axe de son diamètre extérieur. On englobera ces défauts sous l'appellation : défaut d'alignement des fibres. Pour pallier ce défaut, après positionnement du composant 12 on insère une fibre optique 1 ou 2 dans chacune des parties 7a et 7b du tube capillaire 7, on positionne chaque fibre 1 et 2 en translation suivant l'axe 5 longitudinal et en rotation autour de l'axe 5 longitudinal pour réduire au maximum les pertes optiques dues à un défaut d'alignement des fibres 1 et 2.

Des essais ont montré que, grâce à cette dernière opération, la perte maximum d'insertion était de l'ordre de 1,5 dB. On se rapproche de la perte mesurée en réalisant un positionnement dynamique mais avec un procédé nettement moins coûteux.

## Revendications

1. Procédé de positionnement d'un composant (12) optique entre deux fibres optiques (1, 2) munies à leur extrêmité de lentilles (3, 4) consistant à :
- percer un trou d'un certain diamètre dans un support (6)
- réaliser une découpe (10) borgne du support (6) et du trou, de façon à séparer le trou en deux parties (7a, 7b) une première face plane (11) de la découpe (10) étant perpendiculaire à un axe (5) longitudinal du trou,
- positionner le composant (12) sur la première face plane (11),
- positionner une fibre optique (1, 2) dans chacune des parties (7a, 7b)
et **caractérisé en ce que** :
un tube capillaire dont le diamètre intérieur est prévu pour y glisser une fibre optique a été préalablement placé dans le trou et séparé en deux lors de la découpe borgne du support.

2. Procédé selon la revendication 1, **caractérisé en ce que** le positionnement du composant (12) est réalisé en repérant l'axe (5) longitudinal du tube capillaire (7) sur la première face plane (11) de la découpe (10), puis en positionnant le composant (12) par rapport au repère ainsi défini.

3. Procédé selon la revendication 2, **caractérisé en qu'**une seconde face (13) plane de la découpe (10) forme un angle aigu avec la première face (11) plane de la découpe (10) et en ce que le repérage de l'axe longitudinal (5) du tube capillaire (7) et le positionnement du composant (12) par rapport au repère se fait par observation visuelle en utilisant la seconde face plane (13) de la découpe (10) comme moyen de renvoi optique.

4. Procédé selon la revendication 2, **caractérisé en que** le tube capillaire (7) est collé au support (6) de façon à former ensemble un bloc optiquement homogène, et en ce que le repérage de l'axe longitudinal (5) du tube capillaire (7) et le positionnement du composant (12) par rapport au repère se fait par observation visuelle suivant l'axe (5) longitudinal du tube capillaire (7).

5. Procédé selon l'une des revendications précédentes, **caractérisé en ce qu'**on positionne chaque fibre (1, 2) en translation suivant l'axe (5) longitudinal et en rotation autour de l'axe (5) longitudinal pour réduire au maximum les pertes optiques dues à un défaut d'alignement des fibres (1, 2).

6. Procédé selon l'une des revendications précédentes, **caractérisé en ce que** les lentilles (3, 4) focalisent un rayonnement qui les traverse sur un diamètre de mode gaussien compris entre 1 et 50 µm.

7. Dispositif de positionnement d'un composant optique (12) entre deux fibres optiques (1, 2) munies à leur extrémité de lentilles (3, 4), **caractérisé en ce qu'**il comporte un support (6) au travers duquel est fixé un tube capillaire (7), le support (6) comportant une découpe (10) borgne de façon à séparer le tube capillaire (7) en deux parties (7a, 7b), **en ce que** la découpe (10) comporte une première face plane (11) perpendiculaire à un axe (5) longitudinal du tube capillaire (7), et **en ce que** le composant (12) est positionné sur la première face plane (11).

8. Dispositif selon la revendication 7, **caractérisé en ce que** la découpe comporte une seconde face plane (13) formant un angle aigu avec la première face plane.

9. Dispositif selon l'une des revendications 7 ou 8, **caractérisé en ce que** le tube capillaire (7) est collé au support (6) de façon à former ensemble un bloc optiquement homogène.

## Claims

1. Process for positioning an optical component (12) between two optical fibres (1, 2) furnished at their end with lenses (3, 4), consisting in:
- drilling a hole of a certain diameter in a support (6),
- making a blind cut (10) of the support (6) and of the hole, in such a way as to separate the hole into two parts (7a, 7b), a first plane face (11) of the cut (10) being perpendicular to a longitudinal axis (5) of the hole,
- positioning the component (12) on the first plane face (11),
- positioning an optical fibre (1, 2) in each of the parts (7a, 7b)
and **characterized in that**:
a capillary tube whose inside diameter is designed so as to slip an optibal fibre thereinto has previously been placed into the hole and separated into two during the blind cutting of the support.

2. Process according to Claim 1, **characterized in that** the positioning of the component (12) is carried out by marking the longitudinal axis (5) of the capillary tube (7) on the first plane face (11) of the cut (10), then by positioning the component (12) with respect to the mark thus defined.

3. Process according to Claim 2, **characterized in that** a second plane face (13) of the cut (10) forms an acute angle with the first plane face (11) of the cut (10) and **in that** the marking of the longitudinal axis (5) of the capillary tube (7) and the positioning of the component (12) with respect to the mark is done by visual observation using the second plane face (13) of the cut (10) as means of optical feedback.

4. Process according to Claim 2, **characterized in that** the capillary tube (7) is glued to the support (6) in such a way as together to form an optically homogeneous block, and **in that** the marking of the longitudinal axis (5) of the capillary tube (7) and the positioning of the component (12) with respect to the mark is done by visual observation along the longitudinal axis (5) of the capillary tube (7).

5. Process according to one of the preceding claims, **characterized in that** each fibre (1, 2) is positioned translationally along the longitudinal axis (5) and rotationally about the longitudinal axis (5) so as to reduce to the maximum the optical losses due to a defect of alignment of the fibres (1, 2).

6. Process according to one of the preceding claims, **characterized in that** the lenses (3, 4) focus a radiation which passes through them onto a Gaussian mode diameter of between 1 and 50 µm.

7. Device for positioning an optical component (12) between two optical fibres (1, 2) furnished at their end with lenses (3, 4), **characterized in that** it comprises a support (6) through which is fixed a capillary tube (7), the support (6) comprising a blind cut (10) so as to separate the capillary tube (7) into two parts (7a, 7b), **in that** the cut (10) comprises a first plane face (11) perpendicular to a longitudinal axis (5) of the capillary tube (7), and **in that** the component (12) is positioned on the first plane face (11).

8. Device according to Claim 7, **characterized in that** the cut comprises a second plane face (13) forming an acute angle with the first plane face.

9. Device according to one of Claims 7 or 8, **characterized in that** the capillary tube (7) is glued to the support (6) in such a way as together to form an optically homogeneous block.

## Patentansprüche

1. Verfahren zum Positionieren einer optischen Komponente (12) zwischen zwei optischen Fasern (1, 2), die an ihrem Ende mit Linsen (3, 4) ausgestattet sind, bestehend aus folgenden Schritten:
- Bohren einer Bohrung mit einem gewissen Durchmesser in einem Halter (6),
- Herstellen eines einseitig offenen Ausschnittes (10) des Halters (6) und der Bohrung, derart, dass die Bohrung in zwei Abschnitte (7a, 7b) getrennt wird, wobei eine erste ebene Seite (11) des Ausschnittes (10) senkrecht zu einer Längsachse (5) der Bohrung ist,
- Positionieren der Komponente (12) an der ersten ebenen Seite (11),
- Positionieren einer optischen Faser (1, 2) in jedem der Abschnitte (7a, 7b),
und **dadurch gekennzeichnet, dass**:
ein Kapillarrohr, dessen Innendurchmesser dazu vorgesehen ist, eine optische Faser in dieses einzuschieben, zuvor in der Bohrung angebracht worden ist und bei der Herstellung des einseitig offenen Ausschnittes des Halters in zwei Teile getrennt worden ist.

2. Verfahren nach Anspruch 1, **dadurch gekennzeichnet, dass** das Positionieren der Komponente (12) durchgeführt wird, indem die Längsachse (5) des Kapillarrohres (7) auf der ersten ebenen Seite (11) des Ausschnittes (10) markiert wird und indem anschließend die Komponente (12) bezüglich der so definierten Markierung positioniert wird.

3. Verfahren nach Anspruch 2, **dadurch gekennzeichnet, dass** eine zweite ebene Seite (13) des Ausschnittes (10) einen spitzen Winkel mit der ersten ebenen Seite (11) des Ausschnittes (10) bildet, und **dadurch**, dass das Markieren der Längsachse (5) des Kapillarrohres (7) und das Positionieren der Komponente (12) bezüglich der Markierung durch visuelle Beobachtung erfolgen, unter Verwendung der zweiten ebenen Seite (13) des Ausschnittes (10) als optisches Umlenkmittel.

4. Verfahren nach Anspruch 2, **dadurch gekennzeichnet, dass** das Kapillarrohr (7) an den Halter (6) geklebt ist, derart, dass sie zusammen einen optisch homogenen Block bilden, und **dadurch**, dass das Markieren der Längsachse (5) des Kapillarrohres (7) und das Positionieren der Komponente (12) bezüglich der Markierung durch visuelle Beobachtung entlang der Längsachse (5) des Kapillarrohres (7) erfolgen.

5. Verfahren nach einem der vorhergehenden Ansprüche, **dadurch gekennzeichnet, dass** jede Faser (1, 2) positioniert wird, indem eine Translation entlang der Längsachse (5) und eine Rotation um die Längsachse (5) durchgeführt werden, um die optischen Verluste, die auf einen Ausrichtungsfehler der Fasern (1, 2) zurückzuführen sind, auf ein Minimum zu begrenzen.

6. Verfahren nach einem der vorhergehenden Ansprüche, **dadurch gekennzeichnet, dass** die Linsen (3, 4) eine Strahlung, welche sie durchquert, auf einen Durchmesser einer Gaußschen Mode bündeln, der zwischen 1 und 50 µm beträgt.

7. Vorrichtung zum Positionieren einer optischen Komponente (12) zwischen zwei optischen Fasern (1, 2), die an ihrem Ende mit Linsen (3, 4) ausgestattet sind, **dadurch gekennzeichnet, dass** sie einen Halter (6) umfasst, in dem ein durch ihn hindurchführendes Kapillarrohr (7) befestigt ist, wobei der Halter (6) einen einseitig offenen Ausschnitt (10) aufweist, derart, dass das Kapillarrohr (7) in zwei Abschnitte (7a, 7b) getrennt wird, **dadurch**, dass der Ausschnitt (10) eine erste ebene Seite (11) aufweist, die senkrecht zu einer Längsachse (5) des Kapillarrohres (7) ist, und **dadurch**, dass die Komponente (12) an der ersten ebenen Seite (11) positioniert ist.

8. Vorrichtung nach Anspruch 7, **dadurch gekennzeichnet, dass** der Ausschnitt eine zweite ebene Seite (13) aufweist, die einen spitzen Winkel mit der ersten ebenen Seite bildet.

9. Vorrichtung nach einem der Ansprüche 7 oder 8, **dadurch gekennzeichnet, dass** das Kapillarrohr (7) an den Halter (6) geklebt ist, derart, dass sie zusammen einen optisch homogenen Block bilden.
